# EUROPEAN PATENT SPECIFICATION

(11) **EP 0 651 573 B1**
(45) Date of publication and mention of the grant of the patent: **09.08.2000**
(21) Application number: 94116589.6
(22) Date of filing: 21.10.1994
(51) Int. Cl.: H04N 7/087

(54) **Top televideo decoder with improved command device with a multiple call subtitles key**
Dekoder für TOP-Teletext mit einer verbesserten Steuereinrichtung, die eine Untertiteltaste mit Mehrfachruf enthält
Décodeur pour TOP-Télévidéo avec dispositif de commande amélioré comportant une touche d'appels multiples pour les sous-titres

(30) Priority: 27.10.1993 IT RM930711
(43) Date of publication of application: 03.05.1995
(73) Proprietor: EDICO S.r.l., I-00197 Roma (IT)
(72) Inventor: d'Errico, Federico, I-00186 Roma (IT)
(74) Representative: Eisenführ, Speiser & Partner

(56) References cited:
- EP-A- 0 239 760
- EP-A- 0 468 447
- EP-A- 0 578 300
- US-A- 4 701 794

## Description

The present invention refers to a receiver of television signals comprising a teletext signals decoder of the type known as TOP, and a command device equipped with a subtitles key.

It is known that in various European countries, from among which Italy, systems are in use (generally known with the English word "teletext", and more specifically named "Televideo" in Italy and "Videotext" in Germany) that allow for the transmission, together with the normal television signals, of additional information, inserted in the video signal (under the form of coded digital signals) in several of the horizontal lines that are free during the vertical return period.

Such coded signals, upon a command by the user, are detected by an appropriate decoding circuit, known and generally realised by means of monolithic integrated circuits, inserted in the circuits of the television set, so as to allow the display on the television screen of one of the transmitted information pages, containing text or graphics.

The number of pages normally transmitted are of several hundred, grouped by subject (for example: latest news: pages 110-125, sport: pages 150-162, politics: pages 210-222, games: pages 315-345, etc); the first page (page 100) usually contains the general subject index, and in the successive pages the sub-indexes for each subject, with the relative page numbers. The user has to, each time it is desired to receive a determined page, input a sequence using three numbered keys so as to form the three digit number of the searched page; the decoder begins to receive the pages as they are transmitted, one after the other, by the broadcaster; as soon as the page distinguished by the sequence of digits inputted by the user is transmitted, the decoder provides for its acquisition.

The teletext system has various drawbacks: one of the main ones is represented by the amount of time that one has to wait; for reducing such drawback some variants to the system have been proposed (TOP, FLOF, TOPLESS).

In the system known as TOP see also EP 0 468 447 A2 a key is also present that allows direct access to the page of subtitles, i.e. the page that contains the texts, that can be made to appear in superimposition on the received television image; as an aid to the user; for example the texts can contain a translation in a different language, or represent an aid for the hard of hearing. From EP 0 264 565 A2 it is known to receive, and to select marked pages in the TOP table by use of a specific memory device.

However the subtitled pages are often more than one and it is not known what happens in this case, as there are no TOP standards provided.

The aim of the present invention is that of indicating a receiver circuit of teletext signals that overcomes the previous described drawback.

For allowing such aim, the present invention has as its subject This aim is achieved by a receiver according to claim 1.

Further aims and advantages of the present invention will result in being clear from the detailed description and annexed drawings that follow, supplied purely as an explanatory and non-limiting example, wherein:
figure 1 schematically represents a part of the electrical circuit of a teletext transmissions receiver;
figure 2 schematically represents a significant part of the logic circuit of the control unit of figure 1.

According to the invention it is proposed that the subtitles key allows for the sequential access to all the subtitled pages; in the case of Televideo transmitted by RAI, for example, to pages 777 and 778.

It is to be noted that the proposed organisation does in no way whatsoever change the transmission specifications of the TOP system, but simply represents a characteristic of the receiver.

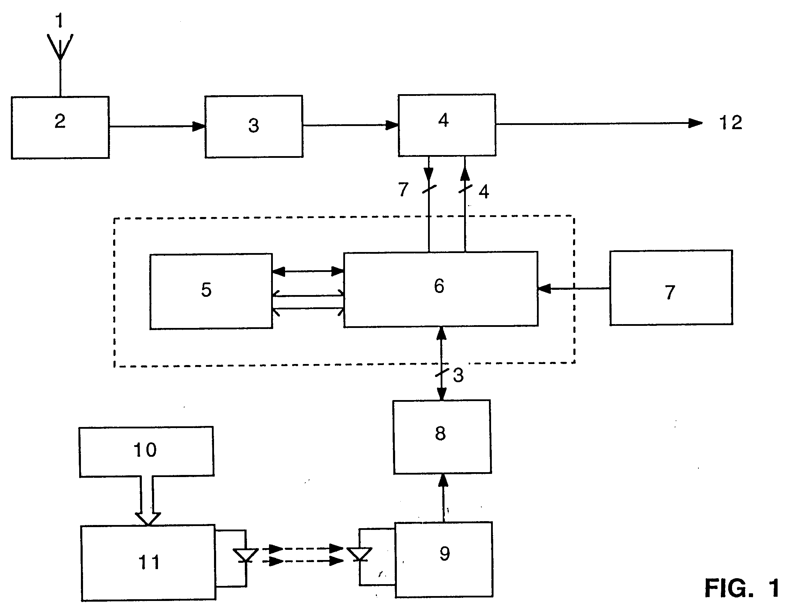

In figure 1 reference number 1 indicates a receiving antenna, connected to a television receiver for receiving the transmissions of television signals, containing the teletext signals. Said antenna is connected to a traditional tuner, indicated with reference number 2; to said tuner an amplifier of intermediate frequency signals follows, also conventional, comprising a video detector, indicated with number 3.

The amplifier 3 supplies in output the composite video signal and is connected to an amplifying circuit and video signal processor indicated with reference number 4; the processing circuit 4 can be for instance of the type VCU 2133 by ITT, which also carries out the analogic to digital conversion and the digital to analogic reconversion of the signal; at the output (reference number 12) of the circuit 4 three signals R, G, B (red, green, blue) are available for displaying the image (coloured television screen, not illustrated in the figure).

The processing circuit 4 is connected, by way of two multiwire connections, to a teletext signals decoding circuit, indicated with reference number 6.

The decoding circuit 6 comprises:
- a data acquisition circuit, that receives the digitalised video input signal, coming from circuit 4;
- a RAM memory that serves as a buffer of the teletext page to be displayed;
- a control unit of the external memory eight pages indicated with number 5;
- a character generator and a control circuit of the display;
- a timing unit, that receives the clock signal from the clock circuit generator, indicated with reference number 7, that can be for instance of the type MCU 2632 by ITT;
- an interface for the bus coming from the central control unit 8.

The acquisition of teletext data starts in the 7th television line and terminates in line 22, the teletext information is synchronised and identified; a comparator, preselects the pages whose numbers have been requested by the control unit 8 and loads them in the memory 5; the internal memory is used as a buffer.

The display begins at line 48 and terminates at line 286; the decoder selects one of the eight pages in the memory for display, the words of 8 bit (characters) are transformed in a matrix of 6 x 10 points by the character generator and are displayed on 24 lines of 40 characters each.

The circuit 6 receives commands from unit 8 by way of an appropriate bus.

The external memory 5 of 64 Kbit is organised in 8 sectors of 8 Kbit each; every sector memorises a page and is organised in 25 lines of 40 bytes each, plus a line of 24 bytes; lines 0-23 represent the 24 lines of the teletext page to be viewed; the 25th line of every sector is used for the control information of the relative sector, while lines 24 of sector zero and one respectively contain general control information and the rolling header.

The central control unit, indicated with reference number 8, may be for example of the type CCU 2030 by ITT, or another logic control circuit comprising a similar microprocessor and a suitable program of operative instructions.

Said central control unit, apart from circuit 6, is connected to an amplifier circuit, indicated with reference number 9, that works as an infrared rays signal receiver, coming from a remote control device, indicated with reference number 11; the latter in turn is connected to a command keyboard, indicated with reference number 10.

The commands given by the user, by way of the keyboard 10, through the transmitter 11 and receiver 9, reach the control unit 8, that provides to decode such commands and to supply the appropriate control signals to the circuit 6.

The TOP system is characterised by the presence of the so called Basic TOP Table, i.e. a table that contains the numbers of all the pages effectively present in the transmission cycle; the pages containing subtitles are marked, in such table, by a particular byte, for which they are recognisable by the decoder.

According to the invention it is therefore proposed that the pressing of the subtitles key of the remote control unit provides direct access to one of the aforementioned pages (for example that of the lower number); and that, by pressing once again the same key, access is had, to a second page of subtitles (for example that being the successive in the sequence of numbers); and so on, if there are still subtitled pages; when there are no more, pressing the key will once again give access to the first of which.

This solution avoids the useless multiplication of keys on the remote control unit, that result in being difficult for the user and expensive for the producer.

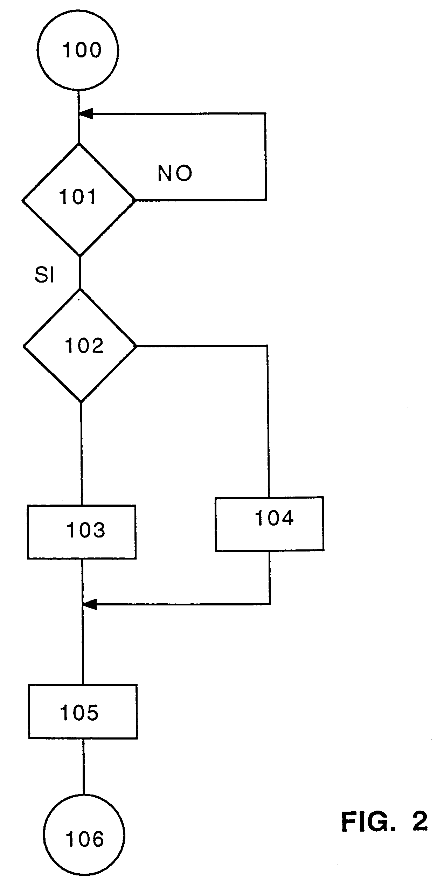

Figure 2 schematically represents a significant part of the central control unit 8, that clarifies the functioning of the operations.

Block 100 is the starting block of the operation of selecting the subtitled pages; control passes to the successive block 101.

Block 101 is a control block; it controls whether the subtitles key has been pressed on the command device (remote control unit), that, from herein on shall be called ST; in the affirmative case control passes to block 102; in the negative case control passes back to block 101 (in all the control blocks the lower output is the YES output; the lateral output is the NO output).

Block 102 is a control block; it controls whether the page displayed is a page of subtitles, comparing the number with the Basic TOP Table; in the affirmative case control passes to block 103; in the negative case control passes to block 104.

Block 103 provides for identifying the successive page of subtitles to that displayed, glancing through the T.O.P. (if there is only one page of subtitles, the page identified will once again be displayed, inasmuch the table is finished, the same is read from the beginning); control passes to the successive block 105.

Block 104 provides for identifying the first page of subtitles, examining the T.O.P. from the beginning; control passes to the successive block 105.

Block 105 provides for displaying the page identified by the block has passed it the control; control is then passed to the successive block 106.

Block 106 is the end of operations block; control can pass back to the starting block 100 or to another operative block similar to the control circuit.

The characteristics of the decoder subject of the present invention result in being clear from the description of the example.

From the given description the advantages of the television receiver incorporating a teletext decoder subject of the present invention also result in being clear.

In particular they consist in the fact that it is possible in a simple and self evident manner, to access a desired page of subtitles, with a practically non existent cost increase of the apparatus.

It is clear that, remaining with the principles of the invention, numerous variants are possible to the characteristics of the decoder described as an example, without for this departing from the scope of novelty inherent in the inventive idea, as it is also clear that the apparatus used in connection with the described method in a practical realisation of the invention could be varied in the specific characteristics and that the components used could be substituted with technically equivalent elements.

## Claims

1. Receiver of television signals comprising a teletext decoder of the type known as TOP system, said teletext decoder being controlled by a central control unit (8) receiving commands from a command device equipped with a subtitles key (ST), characterized in that said central control unit (8) comprises elements for controling, selecting and providing display (102, 103, 104, 105) which, when the said subtitles key is pressed identify and provide display of one page marked as teletext subtitle page, by examining the table provided by the TOP system and allow direct access to the identified subtitle page and when the same subtitles key is pressed again identify and provide display of the next subtitle page, if any, provided in the received television signals, by glancing through the TOP table and examining what is the next existing page marked as subtitle page.

2. Receiver according to claim 1, characterised in that said elements for selecting (103, 104) identify the subtitle page having the lowest value in said table (Basic TOP Table) at the moment of the first pressing of the said subtitles key.

## Patentansprüche

1. Empfänger für Fernsehsignale mit einem Teletext-Dekodierer des als TOP-System bekannten Typs, wobei der Teletext-Dekodierer gesteuert wird durch eine zentrale Steuerungseinheit (8), welche Befehle von einem Befehlsgerät empfängt, das mit einer Untertitel-Taste (ST) ausgestattet ist,
dadurch gekennzeichnet, dass die zentrale Steuerungseinheit (8) Elemente zum Steuern und Auswählen und Bereitstellen einer Anzeige (102, 103, 104, 105) umfasst, welche, wenn die Untertitel-Taste gedrückt wird, eine als Teletext-Untertitelseite markierte Seite identifizieren und zur Anzeige bereitstellen durch Prüfen der durch das TOP-System bereitgestellten Tabelle und gestatten eines direkten Zugriffs auf die identifizierte Untertitel-Seite, und wenn die gleiche Untertitel-Taste erneut gedrückt wird, identifizieren und bereitstellen zur Anzeige der nächsten Untertitel-Seite, wenn sie in den empfangenen Fernsehsignalen enthalten ist, durch durchsehen der TOP-Tabelle und untersuchen, welche die als Untertitel-Seite markierte vorhandene, nächste Seite ist.

2. Empfänger nach Anspruch 1,
dadurch gekennzeichnet, dass die Auswahl-Elemente (103, 104) die Untertitel-Seite mit dem niedrigsten Wert in der Tabelle (Basis-TOP-Tabelle) in dem Moment des ersten Drückens der Untertitel-Taste identifizieren.

## Revendications

1. Récepteur de signaux de télévision comprenant un décodeur télétexte du type connu sous le nom de système TOP, ledit décodeur télétexte étant commandé par une unité centrale de traitement (8) recevant des commandes d'un dispositif de commande équipé d'une touche d'appel des sous-titres (ST), caractérisé en ce que ladite unité centrale de traitement (8) comprend des éléments permettant la commande, la sélection et la réalisation de l'affichage (102, 103, 104, 105), qui, lorsque ladite touche d'appel des sous-titres est enfoncée, identifient et réalisent l'affichage d'une page repérée comme page de sous-titres télétexte, en examinant la table fournie par le systeme TOP et permettent un accès direct à la page de sous-titres identifiée et lors d'une nouvelle pression sur la même touche d'appel des sous-titres, identifient et réalisent l'affichage de la page de sous-titres suivante, le cas échéant, fournie dans les signaux de télévision reçus, en parcourant la table TOP et en examinant quelle est la page existante suivante repérée comme page de sous-titres.

2. Récepteur selon la revendication 1, caractérisé en ce que lesdits éléments de sélection (103, 104) identifient la page de sous-titres ayant la valeur la plus faible dans la dite table (table TOP de base) au moment de la première pression sur ladite touche d'appel des sous-titres.
